# FASCICULE DE BREVET EUROPEEN

(11) **EP 3 983 293 B1**
(45) Date de publication et mention de la délivrance du brevet: **04.03.2026**
(21) Numéro de dépôt: 20735493.7
(22) Date de dépôt: 12.06.2020
(51) Int. Cl.: B64C 25/42, B33Y 80/00, B33Y 70/00, B60B 25/00

(54) **BARRETTE POUR ROUE FREINEE D'AERONEF**
STANGE FÜR GEBREMSTES FLUGZEUGRAD
BAR FOR BRAKED AIRCRAFT WHEEL

(30) Priorité: 14.06.2019 FR 1906393
(43) Date de publication de la demande: 20.04.2022
(73) Titulaire: Safran Landing Systems, 78140 Vélizy-Villacoublay (FR)
(72) Inventeur: SOULA, Aurélie, 77550 MOISSY-CRAMAYEL (FR); PALAZZOLI, Patrice, 77550 MOISSY-CRAMAYEL (FR); DAULNY, Alexandre, 77550 MOISSY-CRAMAYEL (FR); CARATY, Arnaud, 77550 MOISSY-CRAMAYEL (FR)
(74) Mandataire: Cabinet Boettcher
(86) Numéro de dépôt international: PCT/EP2020/066382
(87) Numéro de publication internationale: WO 2020/249783

(56) Documents cités:
- EP-A1- 2 940 340
- EP-A1- 3 258 129
- EP-A1- 3 473 541
- EP-A2- 3 184 843
- US-A- 6 003 954

## Description

La présente invention concerne le domaine de l'aéronautique et, plus particulièrement, le freinage des roues d'aéronef.

### ARRIERE PLAN DE L'INVENTION

On connaît des roues d'aéronefs montées sur des atterrisseurs et pourvues d'un frein. Le frein comprend généralement des disques stators disposés en alternance avec des disques rotors entraînés en rotation par des barrettes en un alliage de marque Inconel solidaires du pourtour inférieur d'une jante de la roue. Les barrettes sont reçues dans des encoches périphériques des disques rotors selon une direction sensiblement parallèle à un axe de rotation de ladite roue. Une pression commandée sur l'ensemble des disques génère du frottement entre les disques en regard et donc un couple de freinage qui ralentit la rotation de la roue.

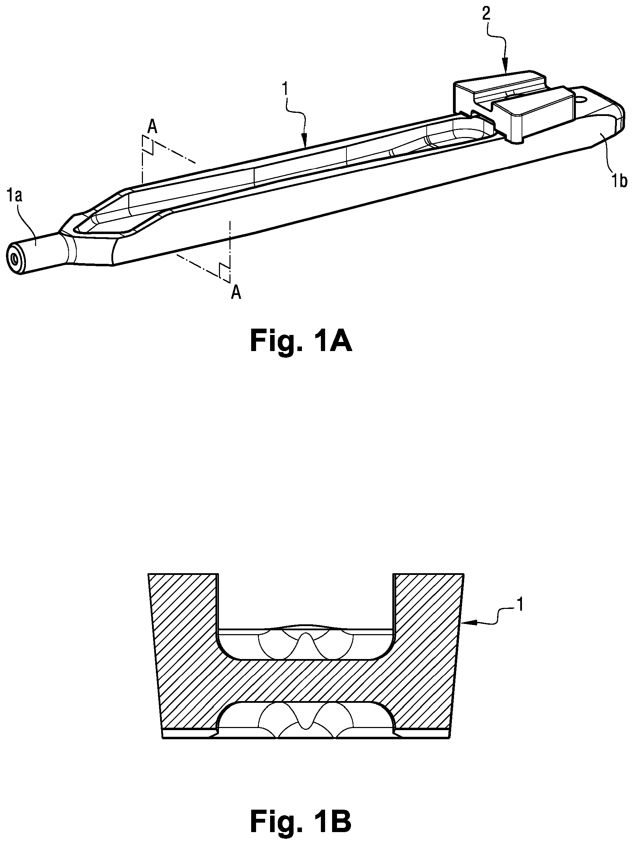

Les barrettes peuvent être venues de matière avec une jante de la roue ou rapportées sur cette dernière. En référence à la figure 1A, certaines barrettes 1 connues comportent à une extrémité 1a une queue cylindrique destinée à s'enfoncer dans des orifices pratiqués dans un voile de la jante, et à une extrémité 1b opposée un orifice agencé pour recevoir une vis se vissant dans un orifice taraudé de la jante. Des cales 2 en titane sont interposées entre les barrettes 1 et la jante pour, d'une part, positionner les barrettes 1 selon une direction parallèle à l'axe de rotation de la roue et, d'autre part, contribuer à limiter les flux de chaleur entre les disques et la jante qui peuvent être préjudiciables pour un pneumatique monté sur ladite jante.

Comme illustré à la figure 1B, les barrettes 1 présentent parfois une section transversale globalement constante en forme de H. Une telle section permet de tenir les sollicitations mécaniques induites par le freinage et en particulier les contraintes de cisaillement et de flexion générées par le ralentissement des disques rotors.

De telles barrettes sont par exemple connues du document FR-A-2937949. D'autres barrettes ayant une forme de H sont connues des documents EP-A1-2940340 et US-A-6003954.

Une roue freinée d'aéronef peut comporter sept à onze barrettes 1 en fonction de la taille de la roue. Un aéronef comprenant deux à six roues par atterrisseur et une barrette 1 pesant 500 à 800 grammes, il apparaît que les barrettes participent de manière significative à la masse globale de l'ensemble roue-frein.

Or, l'allègement des aéronefs est devenu un objectif incontournable pour tous les constructeurs aéronautiques, notamment depuis que la règlementation les y pousse. Des normes environnementales exigent en effet la réduction des émissions de polluants, notamment de dioxyde de carbone (CO2).

### OBJET DE L'INVENTION

L'invention a donc pour objet de proposer une barrette pour roue freinée d'aéronef permettant notamment de diminuer la masse de l'ensemble roue-frein d'un aéronef sans dégradation de la résistance mécanique de ladite barrette.

### RESUME DE L'INVENTION

A cet effet, l'invention propose une barrette pour roue freinée d'aéronef destinée à être rapportée sur une jante de la roue pour entraîner en rotation des disques rotors de frein. La barrette comprend un corps sensiblement rectiligne dont au moins un tronçon comporte deux ailes reliées par une âme et destinées à coopérer avec les disques rotors.

Selon l'invention, la barrette comprend deux éléments de contreventement reliant une partie supérieure de chacune des ailes à une partie centrale de l'âme.

De tels éléments de contreventement permettent d'ajuster de manière optimale les épaisseurs des ailes et de l'âme, et donc de réduire la masse globale de la barrette sans altérer la résistance mécanique de cette dernière.

Selon un mode de réalisation particulier, l'élément de contreventement est une paroi s'étendant selon une direction longitudinale de la barrette entre ledit bord libre et la partie centrale de l'âme.

Selon une caractéristique particulière, une portion du corps forme une cale de fixation de la barrette à la jante.

Il n'est donc plus nécessaire de prévoir une opération d'ajout d'une cale lors du montage de la barrette, ce qui permet de limiter le nombre d'opérations nécessaires au montage de la barrette sur la jante de la roue.

Avantageusement, la cale comporte des évidements, ce qui permet de limiter la masse globale de la barrette mais aussi limiter le transfert thermique vers la jante.

Selon une autre caractéristique particulière, une portion du corps comporte une structure en treillis.

L'invention concerne également une roue freinée d'aéronef comprenant une jante ayant un pourtour intérieur délimitant un espace de réception de disques rotors de frein, et de telles barrettes fixées à la jante pour lier en rotation les disques rotors de frein à la jante.

L'invention concerne en outre un train d'atterrissage comprenant au moins une telle roue et un aéronef comprenant un tel train d'atterrissage.

L'invention a également pour objet un procédé de fabrication d'une telle barrette, ledit procédé comprenant au moins une opération de fabrication additive du corps de la barrette.

Selon un mode de mise en œuvre particulier, l'opération de fabrication additive est réalisée de manière à obtenir la barrette en position verticale.

Alternativement, l'opération de fabrication additive est réalisée de manière à obtenir la barrette en position horizontale et comprend l'étape de réaliser un treillis supportant une paroi du corps de la barrette.

De préférence, l'opération de fabrication additive utilise la fusion laser sur lit de poudre.

De manière particulière, la poudre est une poudre d'alliage de marque Inconel.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1A est une vue en perspective d'une barrette de l'art antérieur ;
   [Fig. 1B] la figure 1B est une vue en coupe transversale selon un plan A-A de la barrette illustrée à la figure 1A ;
- la figure 2 est une vue latérale d'un aéronef comprenant des trains d'atterrissage pourvus de roues freinées ;
- la figure 3 est une vue en coupe axiale d'une des roues freinées de l'aéronef illustré à la figure 2, dont la jante est équipée de barrettes selon un mode de réalisation particulier de l'invention ;
- la figure 4A est une vue en perspective d'une barrette de la roue freinée illustrée à la figure 3 ;
- la figure 4B est une vue en coupe transversale selon un plan A'-A' de la barrette illustrée à la figure 4A ;
- la figure 4C est une vue détaillée de face d'une portion de la barrette illustrée à la figure 4A ;
- la figure 4D est une vue détaillée de derrière d'une portion de la barrette illustrée à la figure 4A ;
- la figure 5 est une vue en coupe transversale d'une variante de la barrette illustrée à la figure 4A comprenant une portion comportant une structure en treillis.

### DESCRIPTION DETAILLEE DE L'INVENTION

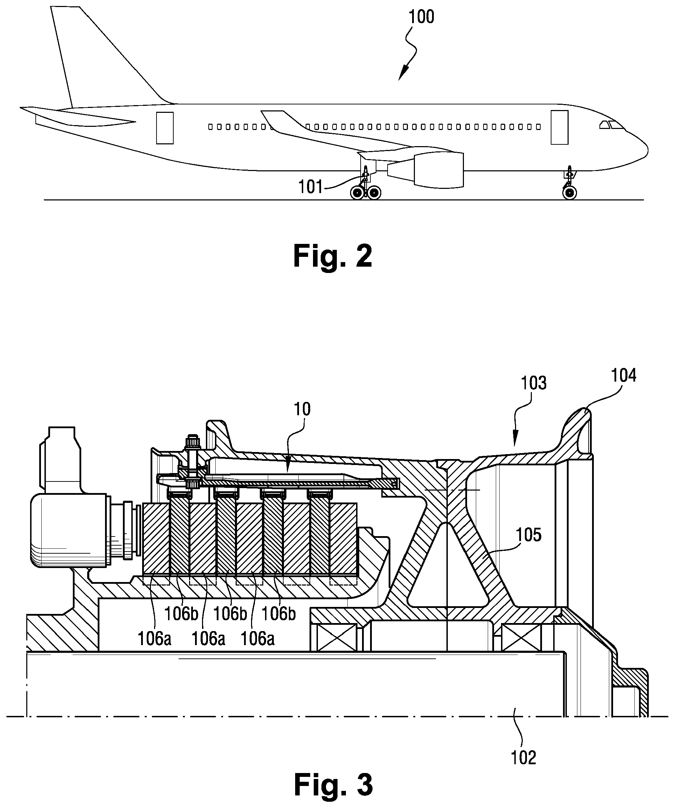

En référence aux figures 2 et 3, un aéronef 100 selon l'invention comprend une structure pourvue de trains d'atterrissage 101. Chaque train d'atterrissage 101 comprend une jambe ayant une extrémité articulée à la structure de l'aéronef 100 et une extrémité opposée portant un essieu 102 sur lequel une roue 103 est montée pour pivoter.

La roue 103 comprend une jante 104 et un voile 105 reliant la jante 104 à un moyeu reçu à pivotement sur l'essieu 102 de sorte qu'une surface intérieure de la jante 104 s'étend en regard d'une surface extérieure du moyeu et délimite avec cette dernière un espace de réception d'un empilement de disques d'un frein. L'empilement comprend des disques stators 106a fixes en rotation par rapport à la jambe de l'atterrisseur et des disques rotors 106b comportant des encoches périphériques recevant des barrettes, généralement désignées en 10, fixées sur la surface intérieure de la jante 104.

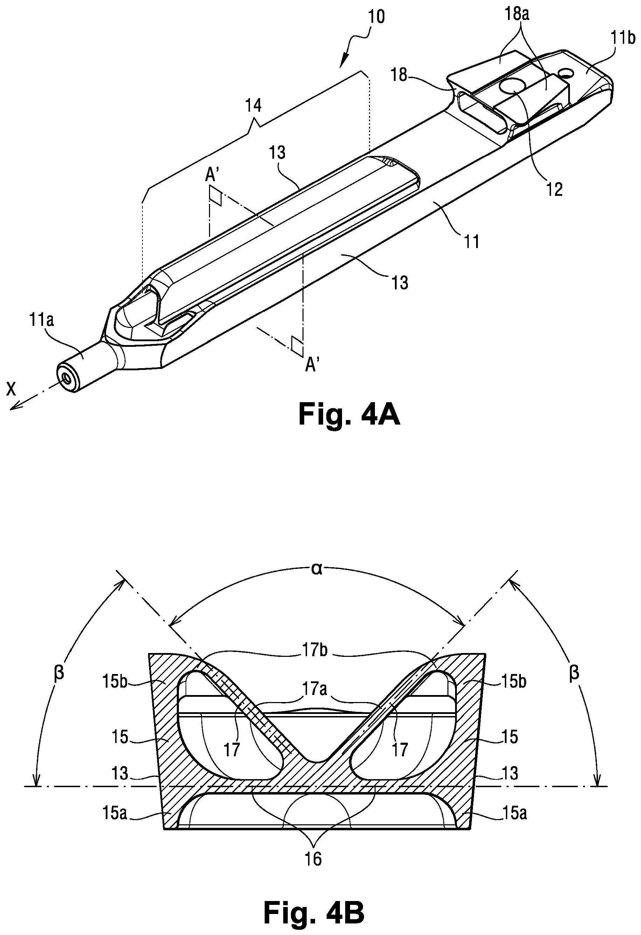

En référence à la figure 4A, chaque barrette 10 comprend un corps 11 s'étendant selon un axe X longitudinal. Le corps 11 comprend une première extrémité 11a en forme de queue cylindrique destinée à être reçue dans un orifice de la jante 104 s'étendant parallèlement à un axe de rotation de la roue 103, et une deuxième extrémité 11b comportant un perçage 12 selon une direction radiale destiné à recevoir une vis de fixation de la barrette 10 à la jante 104.

Le corps 11 comprend par ailleurs deux faces d'appui 13 latérales s'étendant parallèlement à l'axe X et destinées à coopérer avec des cavaliers agencés dans les encoches périphériques des disques rotors 106b de frein. Les deux faces d'appui 13 forment un angle α non nul de façon à ce qu'en service, celles-ci s'étendent radialement vis-à-vis de la jante 104. Sur les faces d'appui 13 est appliqué un traitement de surface « High Velocity Oxy Fuel » (HVOF) afin d'obtenir un comportement tribologique adéquat entre la barrette 10 et les cavaliers. Tout ceci est bien connu et n'est rappelé qu'à titre d'information.

Entre la première extrémité et la deuxième extrémité, le corps 11 comporte un tronçon 14 présentant, comme illustré à la figure 4B, une section transversale globalement constante et symétrique par rapport à un plan médian du corps 11. La section transversale est sensiblement en forme de H et le tronçon 14 comporte ainsi deux ailes 15 qui ont des faces intérieures reliées entre elles par une âme 16 et des faces extérieures formant les faces d'appui 13. Les ailes 15 comprennent une partie inférieure 15a et une partie supérieure 15b s'étendant chacune de part et d'autre de l'âme 16. Les parties supérieures 15b des ailes 15 présentent ici une hauteur supérieure à celle des parties inférieures 15a. La hauteur des parties supérieures 15b des ailes 15 est ici sensiblement égale à quatre fois celle des parties inférieures 15a des ailes 15. La distance séparant les bords libres des parties supérieures 15b des ailes 15 est légèrement supérieure à celle séparant les bords libres des parties inférieures 15a des ailes 15.

Par ailleurs, des éléments de contreventement 17 relient les bords libres des parties supérieures 15b des ailes 15 à une partie centrale de l'âme 16. Chaque élément de contreventement 17 comporte une paroi ayant une zone plane 17a s'étendant entre la partie centrale de l'âme 16 et une zone arrondie 17b qui relie la zone plane 17a au bord libre de la partie supérieure 15b d'une des ailes 15. La zone plane 17a des éléments de contreventement 17 forment avec l'âme 16 un angle β qui est ici sensiblement égal à 45 degrés. Les éléments de contreventement 17 permettent de s'opposer à tout effet de déformation ou de renversement des ailes 15 lorsque la barrette 10 est en service et ainsi d'optimiser l'épaisseur des ailes 15 et de l'âme 16.

Une portion de l'extrémité 11b du corps 11 est conformée pour constituer une cale 18 de fixation de la barrette 10 à la jante 104. La cale 18 est ainsi venue de matière avec la barrette 10 et est traversée en son centre par le perçage 12 permettant le passage de la vis de fixation de la barrette 10 à la jante 104. La cale 18 comporte, en partie supérieure, deux faces d'appui 18a planes s'étendant dans un même plan et destinées à coopérer avec une surface plane de la jante 104. Les deux faces d'appui 18a sont réparties symétriquement de part et d'autre du perçage 12.

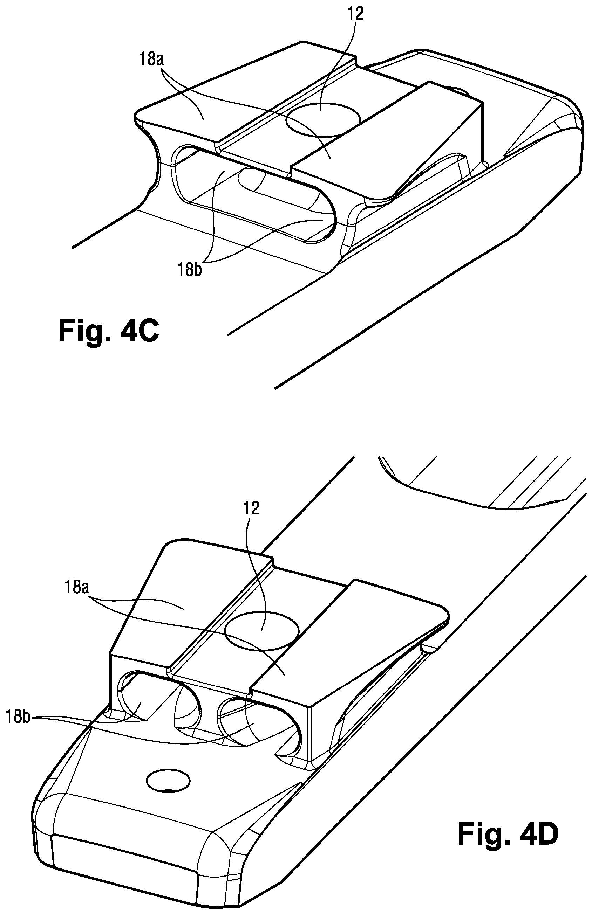

En référence aux figures 4C et 4D, la cale 18 est évidée par la réalisation de deux canaux 18b s'étendant sensiblement selon une direction longitudinale de la barrette en contournant le perçage 12. Les canaux 18b ont plusieurs fonctions : ils permettent à l'air de circuler à l'intérieur de la cale 18, notamment sous l'effet d'une circulation forcée d'air imposée par un ventilateur de refroidissement des freins et leur présence limite la quantité de matière de la cale 18 permettant un transfert de chaleur par conduction des disques rotors 106b de frein vers la jante 104.

Les canaux 18b diminuent ainsi considérablement le taux de conduction thermique de la cale 18 et contribuent dès lors à limiter significativement l'échauffement de la jante 104, notamment au niveau des faces d'appui 18a de la cale 18 sur la jante 104, tout en préservant la capacité de la cale 18 à transmettre le couple de freinage à la jante 104.

La barrette 10 est réalisée par fabrication additive verticale suivant l'axe X, et plus particulièrement par fusion laser sur lit de poudre métallique, appelée aussi « Laser Beam Melting » (LBM). La barrette 10 est alors obtenue en position verticale. Ce procédé permet la fabrication de la barrette 10 en une seule opération à partir d'un fichier numérique 3D de ladite barrette 10. La barrette 10 est construite en utilisant la fusion sélective de poudre d'alliage de marque Inconel dans une atmosphère contrôlée. La poudre d'alliage de marque Inconel est étalée par un racleur en lit d'une épaisseur variable de 30 à 90 micromètres. Un faisceau laser à fibre optique est orienté par des miroirs pour balayer sélectivement le lit de manière à fusionner la poudre dans des zones définies en amont par le fichier numérique 3D. Le faisceau laser peut par exemple être un faisceau laser YAG (Yttrium Aluminium Garnet).

A interface de fixation identique, la barrette 10 permet, par rapport à la barrette 1, un gain de masse de l'ensemble barrette/cale compris entre 15% et 20%. Par ailleurs, la résistance mécanique et en particulier la tenue en flexion de la barrette est améliorée.

Bien entendu, l'invention n'est pas limitée aux modes de réalisation décrits mais englobe toute variante entrant dans le champ de l'invention telle que définie par les revendications.

Le corps 11 de la barrette 10 peut ne pas intégrer de cale mais une face d'appui agencée pour recevoir une cale rapportée sur la barrette.

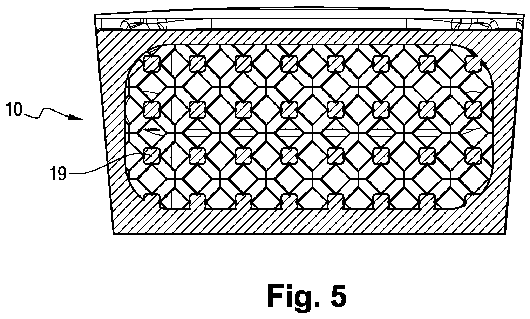

Afin d'augmenter la rigidité de la barrette 10 mais aussi de permettre une fabrication de la barrette 10 par addition d'une poudre de manière à obtenir la barrette à l'horizontale, une portion du corps 11 de ladite barrette 10 peut comporter, comme illustré à la figure 5, une structure en lattice 19, autrement dit une structure évidée en treillis dont un motif élémentaire est par exemple un tétraèdre, qui sert de support à une paroi de la barrette.

Les éléments de contreventement 17 peuvent être de forme différente de celles illustrées à la figure 4B.

Bien qu'ici la barrette 10 soit réalisée par fabrication additive, elle peut aussi être réalisée par d'autres procédés, comme par exemple la fonderie cire perdue.

D'autres poudres, autre que la poudre d'alliage de marque Inconel, pourraient être utilisées pour fabriquer la barrette 10, notamment en fonction des exigences fonctionnelles de ladite barrette (poudre d'acier...).

## Revendications

1. Barrette (10) pour roue (103) freinée d'aéronef destinée à être rapportée sur une jante (104) de la roue pour entraîner en rotation des disques rotors (106b) de frein, la barrette comprenant un corps (11) sensiblement rectiligne dont au moins un tronçon (14) comporte deux ailes (15) reliées par une âme (16) et destinées à coopérer avec les disques rotors, chaque aile comprenant une partie inférieure (15a) et une partie supérieure (15b) s'étendant chacune de part et d'autre de l'âme, la barrette comprenant deux éléments de contreventement (17) s'opposant chacun à un renversement de l'une des deux ailes, **caractérisée en ce que** chacun des éléments de contreventement relie un bord de la partie supérieure de l'une des deux ailes à une partie centrale de l'âme.

2. Barrette selon la revendication 1, dans laquelle chacun des éléments de contreventement (17) est une paroi s'étendant selon une direction longitudinale de la barrette entre le bord de la partie supérieure de l'aile (15) et la partie centrale de l'âme (16).

3. Barrette selon la revendication 1 ou la revendication 2, dans laquelle une portion du corps (11) forme une cale (18) de fixation de la barrette à la jante (104).

4. Barrette selon la revendication 3, dans laquelle ladite portion du corps formant la cale comporte des évidements (18b).

5. Barrette selon l'une quelconque des revendications précédentes, dans laquelle une portion du corps comporte une structure en treillis.

6. Roue (103) freinée d'aéronef comprenant une jante (104) ayant un pourtour intérieur délimitant un espace de réception de disques rotors (106b) de frein, et des barrettes (10) fixées à la jante pour lier en rotation les disques rotors de frein à la jante, **caractérisée en ce que** les barrettes sont conformes à l'une quelconques des revendications précédentes.

7. Train d'atterrissage (101) comprenant au moins une roue (103) freinée selon la revendication 6.

8. Aéronef (100) comprenant un train d'atterrissage (101) selon la revendication 7.

9. Procédé de fabrication d'une barrette (10) selon l'une quelconque des revendications 1 à 5, ledit procédé comprenant au moins une opération de fabrication additive du corps de la barrette.

10. Procédé selon la revendication 9, dans lequel l'opération de fabrication additive est réalisée de manière à obtenir la barrette en position verticale.

11. Procédé selon la revendication 9, dans lequel l'opération de fabrication additive est réalisée de manière à obtenir la barrette en position horizontale et comprend l'étape de réaliser une structure en treillis supportant une paroi du corps de la barrette.

12. Procédé selon l'une quelconque des revendications 9 à 11, dans laquelle l'opération de fabrication additive utilise la fusion laser sur lit de poudre.

13. Procédé selon la revendication 12, dans laquelle la poudre est une poudre d'alliage de marque Inconel.

## Patentansprüche

1. Leiste (10) für ein gebremstes Luftfahrzeugrad (103), die dazu bestimmt ist, an einer Radfelge (104) angebracht zu werden, um Bremsrotorscheiben (106b) in Drehung zu versetzen, wobei die Leiste einen im Wesentlichen geradlinigen Körper (11) umfasst, der in zumindest einem Abschnitt (14) zwei durch einen Steg (16) miteinander verbundene Flügel (15) aufweist, die dazu bestimmt sind, mit den Rotorscheiben zusammenzuwirken, wobei jeder Flügel einen unteren Teil (15a) und einen oberen Teil (15b) umfasst, die sich jeweils zu beiden Seiten des Stegs erstrecken, wobei die Leiste zwei Verstrebungselemente (17) umfasst, die jeweils ein Einknicken eines der beiden Flügel verhindern, **dadurch gekennzeichnet, dass** ein jedes der Verstrebungselemente einen Rand des oberen Teils eines der beiden Flügel mit einem Mittelteil des Stegs verbindet.

2. Leiste nach Anspruch 1, wobei es sich bei jedem der Verstrebungselemente (17) um eine Wand handelt, die sich entlang einer Längsrichtung der Leiste zwischen dem Rand des oberen Teils des Flügels (15) und dem Mittelteil des Stegs (16) erstreckt.

3. Leiste nach Anspruch 1 oder nach Anspruch 2, wobei ein Abschnitt des Körpers (11) einen Befestigungskeil (18) zur Befestigung der Leiste an der Felge (104) bildet.

4. Leiste nach Anspruch 3, wobei der Körperabschnitt, der den Keil bildet, Aussparungen (18b) enthält.

5. Leiste nach einem der vorhergehenden Ansprüche, wobei ein Körperabschnitt eine Fachwerkstruktur enthält.

6. Gebremstes Luftfahrzeugrad (103), umfassend eine Felge (104) mit einem Innenrand, der einen Aufnahmeraum zur Aufnahme von Bremsrotorscheiben (106b) begrenzt, und mit Leisten (10), die an der Felge befestigt sind, um die Bremsrotorscheiben mit der Felge drehfest zu verbinden, **dadurch gekennzeichnet, dass** die Leisten gemäß einem der vorhergehenden Ansprüche ausgebildet sind.

7. Fahrwerk (101), welches zumindest ein gebremstes Rad (103) nach Anspruch 6 umfasst.

8. Luftfahrzeug (100), welches ein Fahrwerk (101) nach Anspruch 7 umfasst.

9. Verfahren zur Fertigung einer Leiste (10) gemäß einem der Ansprüche 1 bis 5, wobei das Verfahren zumindest einen additiven Fertigungsvorgang zur Fertigung des Leistenkörpers umfasst.

10. Verfahren nach Anspruch 9, wobei der additive Fertigungsvorgang derart ausgeführt wird, dass die Leiste in senkrechter Position erzeugt wird.

11. Verfahren nach Anspruch 9, wobei der additive Fertigungsvorgang derart ausgeführt wird, dass die Leiste in waagrechter Position erzeugt wird, und den Schritt umfasst, dass eine Fachwerkstruktur erzeugt wird, die eine Wand des Leistenkörpers trägt,

12. Verfahren nach einem der Ansprüche 9 bis 11, wobei in dem additiven Fertigungsvorgang die Laser-Pulverbettfusion zum Einsatz kommt.

13. Verfahren nach Anspruch 12, wobei es sich bei dem Pulver um ein Inconel-Legierungspulver handelt.

## Claims

1. A bar (10) for a braked aircraft wheel (103), the bar being for fitting to a rim (104) of the wheel in order to drive rotor brake disks (106b) in rotation, the bar comprising a substantially rectilinear body (11) having at least one segment (14) including two wings (15) connected together by a core (16) and intended to co-operate with the rotor disks, each wing comprising a lower part (15a) and an upper part (15b) each extending on either side of the core, the bar comprising two brace elements (17) each opposing the overthrow of one of the two wings, **characterized in that** each of the two brace elements connects an edge of the upper part of one of the two wings to a central portion of the core.

2. A bar according to claim 1, wherein the brace element (17) is a wall extending in a longitudinal direction of the bar between said free edge of the wing (15) and the central portion of the core (16).

3. A bar according to claim 1 or claim 2, wherein a portion of the body (11) forms a fastener wedge (18) for fastening the bar to the rim (104).

4. A bar according to claim 3, wherein said portion of the body forming the wedge includes recesses (18b).

5. A bar according to any preceding claim, wherein a portion of the body includes a trellis structure.

6. A braked aircraft wheel (103) comprising a rim (104) having an inner periphery defining a space for receiving both rotor brake disks (106b) and also bars (10) fastened to the rim in order to constrain the rotor brake disks to rotate with the rim, the wheel being **characterized in that** the bars are in accordance with any preceding claim.

7. Landing gear (101) including at least one braked wheel (103) according to claim 6.

8. An aircraft (100) including landing gear (101) according to claim 7.

9. A method of fabricating a bar (10) according to any one of claims 1 to 5, said method comprising at least one operation of fabricating the body of the bar by additive fabrication.

10. A method according to claim 9, wherein the additive fabrication operation is performed in such a manner as to obtain the bar in a vertical position.

11. A method according to claim 9, wherein the additive fabrication operation is performed in such a manner as to obtain the bar in a horizontal position and it includes a step of making a trellis structure supporting a wall of the body of the bar.

12. A method according to any one of claims 9 to 11, wherein the additive fabrication operation makes use of laser beam melting on a bed of powder.

13. A method according to claim 12, wherein the powder is an Inconel^{®} alloy powder.
